# EUROPÄISCHE PATENTSCHRIFT

(11) **EP 2 048 010 B1**
(45) Veröffentlichungstag und Bekanntmachung des Hinweises auf die Patenterteilung: **15.05.2013**
(21) Anmeldenummer: 08017339.6
(22) Anmeldetag: 02.10.2008
(51) Int. Cl.: B60H 1/00

(54) **Kraftfahrzeug-Klimaanlagenanordnung**
Vehicle air conditioning system
Agencement de climatisation de véhicule automobile

(30) Priorität: 12.10.2007 DE 102007049338
(43) Veröffentlichungstag der Anmeldung: 15.04.2009
(73) Patentinhaber: Behr GmbH & Co. KG, 70469 Stuttgart (DE)
(72) Erfinder: Pfander, Andreas, 71384 Weinstadt (DE); Augull, Michael, 71088 Holzgerlingen (DE); Burkhardt, Carsten, 74653 Künzelsau (DE); Schweizer, Gebhard, 71229 Leonberg (DE)
(74) Vertreter: Grauel, Andreas

(56) Entgegenhaltungen:
- EP-A- 1 564 047
- WO-A-2004/014677
- DE-A1- 3 925 726
- DE-A1- 4 013 043
- DE-A1- 10 031 534
- US-A- 4 586 652
- US-A1- 2006 208 100

## Beschreibung

Die Erfindung betrifft eine KraftFahrzeug-Klimaanlagenanordnung, insbesondere für eine Fond-Klimaanlage, gemäß dem Oberbegriff des Anspruches 1.

Bei herkömmlichen Kraftfahrzeug-Klimaanlagen sind üblicherweise der Heizer und der Verdampfer stehend und im Wesentlichen parallel zueinander angeordnet, um eine gute, möglichst verlustfreie Luftdurchströmung zu ermöglichen.

Ferner sind Anordnungen von Zusatzklimageräten in der Mittelkonsole oder hinter einem Radkasten bekannt. In Verbindung mit einem Klimagerät, d.h. einem Verdampfer, kann auch ein Heizer angeordnet sein. Auch in diesem Fall erfolgt die Anordnung der Komponenten im Wesentlichen aufrecht und in Richtung der Fahrzeuglängsachse.

Aus der DE 195 34 738 A1 ist eine Kraftfahrzeug-Klimaanlage bekannt, die ein versetztes Gebläse zum Blasen von Luft, einen Verdampfer, der im Armaturenbrett zentral angeordnet ist und Luft von unten empfängt, und einen Heizer aufweist, der ungefähr horizontal über dem Verdampfer angeordnet ist. Dabei verläuft der Verdampfer geneigt abwärts entlang der Richtung des Luftstroms, um ein Austragen von Kondenswasser zu ermöglichen. Der Verdampfer ist hierbei bevorzugt in einem Winkel von 10 bis 30° zur Horizontalen geneigt. Die beiden Wärmeübertrager, d.h. der Verdampfer und der Heizer, sind in unterschiedlichen Ebenen im Wesentlichen fluchtend angeordnet und der Strömungsweg der Luft durch dieselben ist, um eine möglichst kompakte Klimaanlage zu bilden, möglichst kurz gehalten.

Die DE 102 61 036 A1 offenbart eine Kraftfahrzeug-Klimaanlage mit stehendem Verdampfer und leicht mit seinem oberen Ende in Richtung des Verdampfers geneigtem Heizer und einer Mehrzahl zweiflügeliger Klappen zur Regelung der Temperatur der dem Fahrzeuginnenraum zuzuführenden Luft. Insbesondere ist hierbei jeweils eine zweiflügelige Klappe vor dem Heizer und in dem Bypass zum Heizer vorgesehen. Die Klimaanlage weist ferner beidseitig jeweils einen separaten Schichtungskanal auf, durch den kühle Luft in den Bereich der Fondbelüftung führbar ist. Dieser den Schichtungskanal bildende Luftkanal zweigt im oberen Bereich der Klimaanlage kurz nach dem Verdampfer aus einem im Wesentlichen oberhalb des Heizers ausgebildeten Mischraum ab, wobei die Eintrittsöffnung direkt nach der zweiflüglige Klappe, welche den Luftstrom durch den Bypass zum Heizer regelt, seitlich im Mischraum angeordnet ist. Parallel zum Schichtungskanal verläuft ein weiterer Luftkanal, der vom Mischraum abzeigt und über den temperierte Luft zur Fondbelüftung führbar ist.

Die WO 2004/014 677 A1, die den nächstliegenden Stand der Technik darstellt, offenbart eine Kraftfahrzeug-Klimaanlagenanordnung nach den Merkmalen des Oberbegriffs des Anspruchs 1.

Derartige Klimaanlagenanordnungen lassen noch Wünsche offen.

Es ist Aufgabe der Erfindung, eine verbesserte Kraftfahrzeug-Klimaanlagenanordnung zur Verfügung zu stellen.

Diese Aufgabe wird gelöst durch eine Kraftfahrzeug-Klimaanlagenanordnung mit den Merkmalen des Anspruchs 1. Vorteilhafte Ausgestaltungen sind Gegenstand der Unteransprüche.

Die Erfindung betrifft eine Kraftfahrzeug-Klimaanlagenanordnung, insbesondere für eine Fond-Klimaanlage, mit mindestens einem Heizer und mindestens einem Verdampfer, die in einem Luftführungsgehäuse angeordnet sind, und mit einer Mehrzahl von Luftkanälen, über die temperierte und/oder kalte Luft dem Fahrzeuginnenraum zuführbar ist, wobei vom Kaltluftkanal, der Luft vom Verdampfer um den Heizer einem Mischraum zuführt, ein Luftkanal abzweigt, der kalte Luft am Mischraum vorbei dem Fahrzeuginnenraum zuführt, und in den Luftkanal mindestens ein vom Mischraum abzweigender Luftkanal einmündet, so dass die Kaltluft des Luftkanals mit temperierter Luft vom Mischraum vor dem Austritt in den Fahrzeuginnenraum mischbar ist. Durch die Anordnung der Abzweigung des Luftkanals vom Kaltluftkanal und nicht im Mischraum in der Nähe des einmündenden Kaltluftkanals wird sichergestellt, dass ausschließlich Kaltluft in den Luftkanal gelangt. Die Temperierung in Verbindung mit einer Temperaturschichtung erfolgt dadurch, dass in den Luftkanal temperierte Luft aus dem Mischraum gelangt, so dass auf einfache Weise eine Klimaanlage mit Temperaturschichtung realisiert werden kann. Insbesondere wird durch den zusätzlichen Luftkanal, durch den die kalte Luft strömt der Kaltluftquerschnitt vergrößert, so dass eine vergleichsweise große maximale Kaltluftmenge möglich ist bei relativ geringem Druckabfall und guten akustischen Eigenschaften.

Insbesondere bevorzugt verläuft der abgezweigte Luftkanal parallel zum (Haupt-)Kaltluftkanal, der zum Mischraum führt, insbesondere bevorzugt außenseitig desselben. Der Kaltluftkanal verläuft dabei bevorzugt räumlich oberhalb des Heizers, wobei die Klimaanlage durch den seitlichen, abgezweigte Luftkanal verbreitert und dadurch der Kaltluftquerschnitt vergrößert wird.

Bevorzugt ist der vom Kaltluftkanal abzweigende Luftkanal mittels einer Temperaturmischklappe, insbesondere bevorzugt einer Trommelklappe, welche der Regelung des Luftstroms durch den Heizer und an demselben vorbei dient, verschließbar. Die Regelung erfolgt bevorzugt in Abhängigkeit der Regelung der durch den Kaltluftkanal und vorbei am Heizer geleiteten Luftmenge, Insbesondere bevorzugt ist die Öffnung der Abzweigung des Luftkanals auch durch die Temperaturmischklappe verschließbar.

Dem vom Kaltluftkanal abzweigenden Luftkanal ist vorzugsweise temperierte Luft vom Mischraum zuführbar. Dies ermöglicht eine relativ einfache (Nach-)Temperierung der dem Fahrzeuginnenraum über den Luftkanal zuzuführenden Luft, wobei - je nach Anordnung der Austrittsöffnung im Mischraum - die Lufttemperatur bei geöffneter Temperaturmischklappe zum Kaltluftkanal ggf. unter der Lufttemperatur liegt, die direkt vom Mischraum dem Fahrzeuginnenraum zugeführt wird. Ebenfalls ist - bei ungünstiger Anordnung der Austrittsöffnung im Mischraum in Hinblick auf eine zu hohe Temperatur in dem entsprechenden Bereich - eine sehr einfache Absenkung der Temperatur möglich.

Vorzugsweise verzweigt sich der vom Kaltluftkanal abzweigende Luftkanal in mindestens zwei Luftkanäle, wobei die Luftverteilung der Kaltluft auf die beiden Luftkanäle mittels einer Klappe, insbesondere mittels einer Trommelklappe regelbar ist. Dies ermöglicht beispielsweise und bevorzugt eine einfache Luftverteilung auf den Fußraum und den Ausströmer im Bereich der B-Säule im Falle einer Fond-Klimaanlage. Insbesondere bevorzugt dient die Klappe gleichzeitig auch der Luftverteilung der vom Mischraum kommenden, den Luftkanälen zugeführten Luft, wodurch sich eine relativ einfache Regelung und eine sehr kompakte Ausgestaltung zumindest dieses Verteilerbereichs der Klimaanlage ergibt.

Bei der die Luftverteilung auf die Luftkanäle zum Fahrzeuginnenraum regelnde Klappe handelt es sich vorzugsweise um eine Trommelklappe mit einem axialen Fortsatz mit kreisbogenförmigem Querschnitt, der durch einen Schlitz in der Wand des Luftführungsgehäuses ragt und die Luftverteilung auf mindestens zwei Luftkanäle regelt.

Insbesondere bevorzugt sind die Temperaturmischklappe und die der Luftverteilung auf die Luftkanäle dienende Klappe jeweils eine Trommelklappe. Die Schwenkachsen der Trommelklappen liegen vorzugsweise jeweils entgegen der normalen Luftströmungsrichtung von der Sperrfläche.

Vorzugsweise ist eine Kraftfahrzeug-Klimaanlagenanordnung mit mindestens einem Heizer und mindestens einem Verdampfer vorgesehen, die in einem Luftführungsgehäuse angeordnet sind, wobei eine Schräglage von Heizer und Verdampfer vorgesehen ist, so dass die Ebenen von Verdampfer und Heizer, die senkrecht von Luft durchströmt werden, jeweils in einem Winkel von weniger als 80°, insbesondere weniger als 70°, und ganz besonders bevorzugt von weniger als 60° zur horizontalen Ebene angeordnet sind. Gemäß einer ganz besonders bevorzugten Ausführungsform ist mindestens einer der Wärmeübertrager in einem Winkel von weniger als 50°, insbesondere von weniger als 40° zur horizontalen Ebene geneigt angeordnet. Bei einer derartigen, flachen Anordnung ist eine Anordnung der Klimaanlage oberhalb oder unterhalb des Fahrzeugbodens möglich, wobei die Wärmeübertrager fast liegend hintereinander und ggf. leicht überlappend angeordnet sein können. Jedoch ist maximal eine derartige Überlappung vorgesehen, dass die Projektionen von Verdampfer und Heizer auf eine horizontale Ebene sich maximal entsprechend der Hälfte der auf die horizontale Ebene projizierten Fläche des Heizers überlappen.

Gemäß einer bevorzugten Ausführungsform sind die beiden Wärmeübertrager in einer Richtung geneigt, jedoch vorzugsweise in sich leicht unterscheidenden Neigungswinkeln angeordnet, so dass sich ein günstiger Strömungsverlauf der Luft verbunden mit geringer Baugröße ergibt.

Vorzugsweise ist, insbesondere bevorzugt bei einer Neigung der Wärmeübertrager in einander entsprechender Richtung, eine Überlappung von Verdampfer und Heizer vorgesehen, wobei die Projektion von Verdampfer und Heizer auf eine horizontale Ebene eine Überlappung von maximal einem Drittel, besonders bevorzugt maximal einem Viertel, der auf die horizontale Ebene projizierten Fläche des Heizers entspricht.

Eine derartige, erfindungsgemäße Klimaanlagenanordnung wird vorzugsweise, jedoch nicht ausschließlich, für Fond-Klimaanlagen verwendet.

Im Folgenden wird die Erfindung anhand eines Ausführungsbeispiels unter Bezugnahme auf die Zeichnung im Einzelnen erläutert. Es zeigen:
- Fig. 1: eine perspektivische Ansicht einer Kraftfahrzeug-Klimaanlage gemäß dem Ausführungsbeispiel,

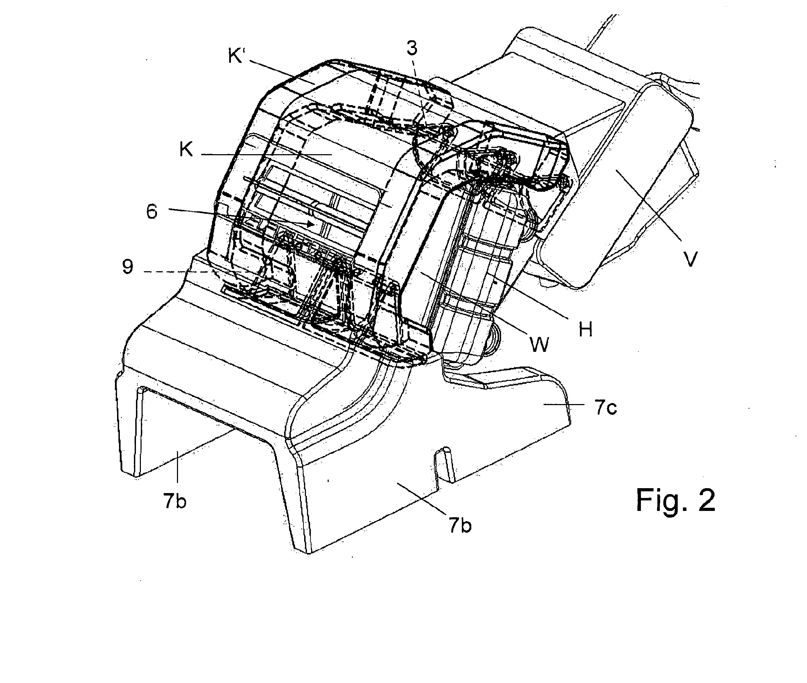

- Fig. 2: eine Darstellung der Klimaanlage von Fig. 1 aus der selben Perspektive und mit Darstellung der Luftkanäle in einem Teilbereich,

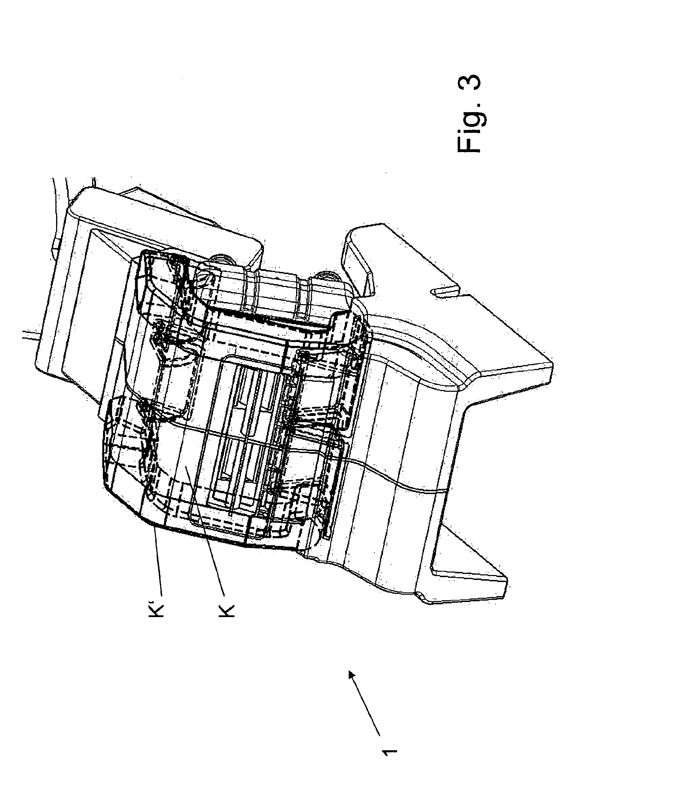

- Fig. 3: eine Fig. 2 entsprechende Darstellung aus einer anderen Perspektive,

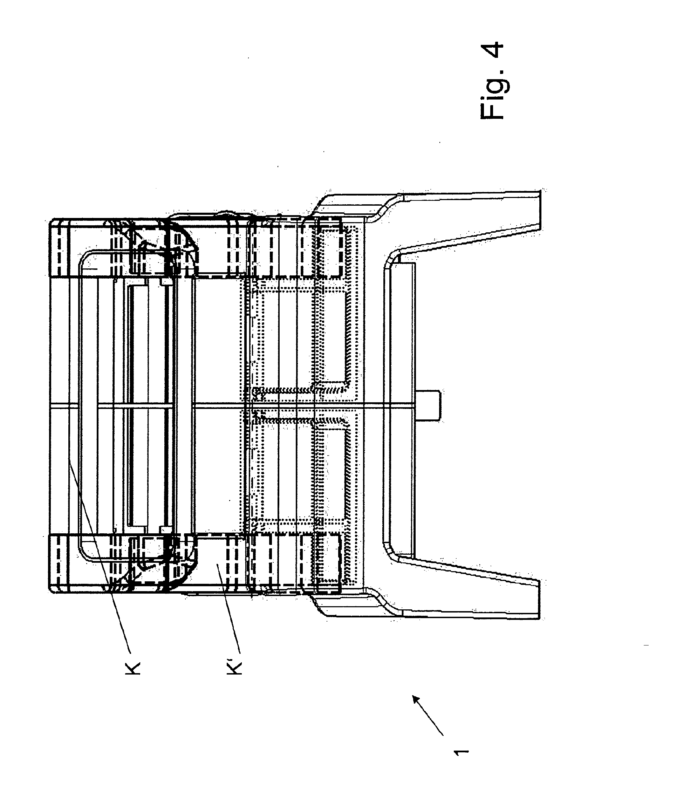

- Fig. 4: eine Fig. 2 entsprechende Darstellung in einer Frontansicht,

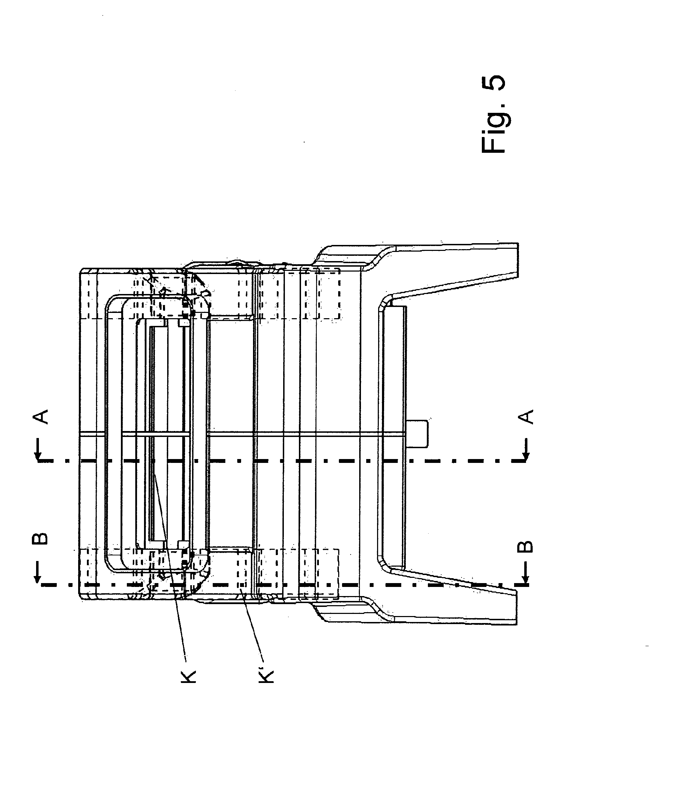

- Fig. 5: eine Fig. 4 entsprechende, etwas vereinfachte Frontansicht,
- Fig. 6: einen Schnitt entlang Linie A-A von Fig. 5 in der Betriebsstellung "maximal kalt",
- Fig. 7: einen Schnitt entlang Linie A-A von Fig. 5 in der Betriebsstellung "maximal warm",
- Fig. 8: einen Schnitt entlang Linie A-A von Fig. 5 in einer Mischbetriebsstellung,

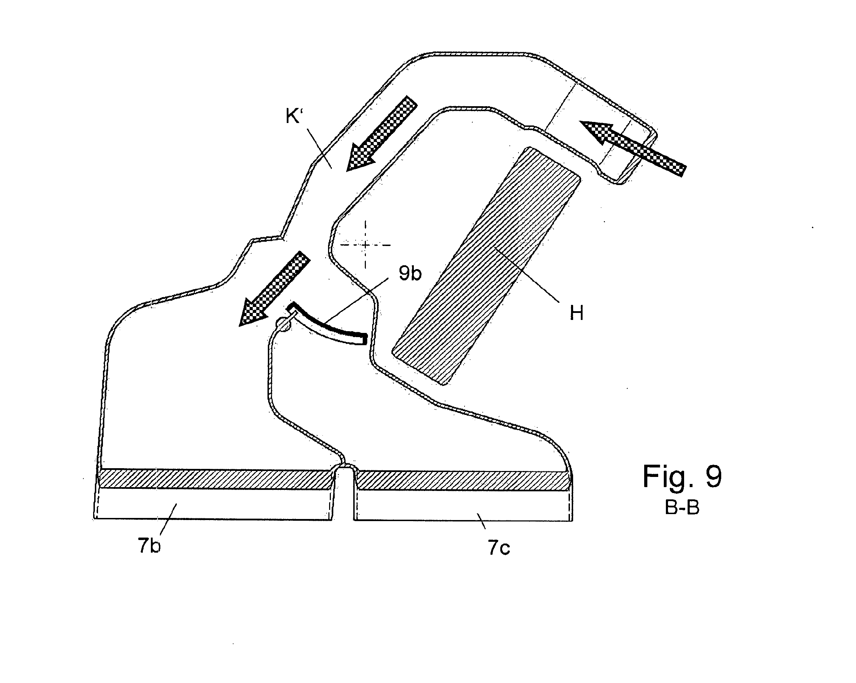

- Fig. 9: einen Schnitt entlang Linie B-B von Fig. 5, und
- Fig. 10: eine perspektivische Ansicht der Luftverteilungsklappe Fondfußraum/B-Säule.

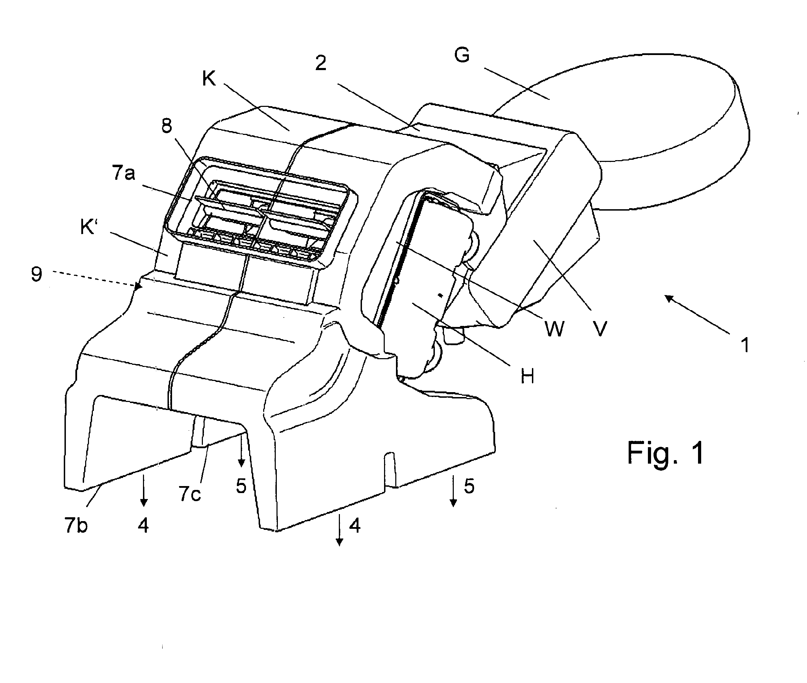

Eine zweizonige, luftseitig geregelte Fond-Kraftfahrzeug-Klimaanlage 1, wie in Fig. 1 dargestellt, weist ein mehrteiliges Luftführungsgehäuse 2 auf, in welchem ein Gebläse G, welches Umluft aus dem Fahrzeuginnenraum und/oder Frischluft aus der Umgebung des Kraftfahrzeugs ansaugt, ein der Lufttemperierung dienender Verdampfer V und Heizer H angeordnet sind. Die gesamte Klimaanlage 1 ist relativ flach und kompakt ausgebildet Hierbei ist sie vorliegend in der Mittelkonsole des Kraftfahrzeugs angeordnet.

Das Gebläse G weist, wie aus Fig. 1 ersichtlich, eine leicht entgegen der Fahrtrichtung geneigte Drehachse auf, so dass die angesaugte Luft den nachfolgend angeordneten Verdampfer V von unten her anströmt. In Luftströmungsrichtung gesehen ist der Verdampfer V vor dem Heizer H angeordnet, wobei die gesamte Luft den mit seinem oberen Ende entgegen der Luftströmungsrichtung geneigten und daher nahezu liegenden Verdampfer V von unten nach oben durchströmt, wonach sie in die horizontale Richtung umgelenkt wird. Der Verdampfer V ist vorliegend in einem Winkel von ca. 35° zur Horizontalen angeordnet.

Der Heizer H, der ebenfalls entgegen der Luftströmungsrichtung geneigt ist, vorliegend in einem Winkel von ca. 60° zur Horizontalen und somit deutlich weniger als der Verdampfer V, wird nur bei Bedarf und ggf. auch nur von einem Teilluftstrom durchströmt. Hinter dem Heizer H ist ein sogenanntes Resterwärmungsgitter angeordnet. Dieses Resterwärmungsgitter sorgt dafür, dass im Betriebszustand "maximal kühlen" oder auch in anderen Kühlzuständen es der Kaltluft verhindert wird an den Warmluftaustritt zu gelangen und sich dort zu erwärmen. Ferner kann das Resterwärmungsgitter dafür sorgen, dass der Luftstrom auch nach unten ausreichend umgelenkt wird, so dass der Warmluftstrom optimiert werden kann.

Die vom Verdampfer V kommende Luft wird im Bereich des Heizers H bedarfsgerecht auf verschiedene Zweige verteilt, wobei der erste Zweig oder Warmluftkanal W direkt durch den Heizer H und der zweite Zweig oder Kaltluftkanal K am Heizer H oben vorbei führt.

Ferner erfolgt ab dem Verdampfer V eine Aufteilung des Luftstroms in zwei Zonen, die jedoch spiegelbildlich bezüglich der Mittellängsebene ausgebildet und durch Trennwände voneinander getrennt sind, so dass im Folgenden nur auf eine Seite, vorliegend der links angeordneten Fahrerseite, der Klimaanlage 1 näher eingegangen wird.

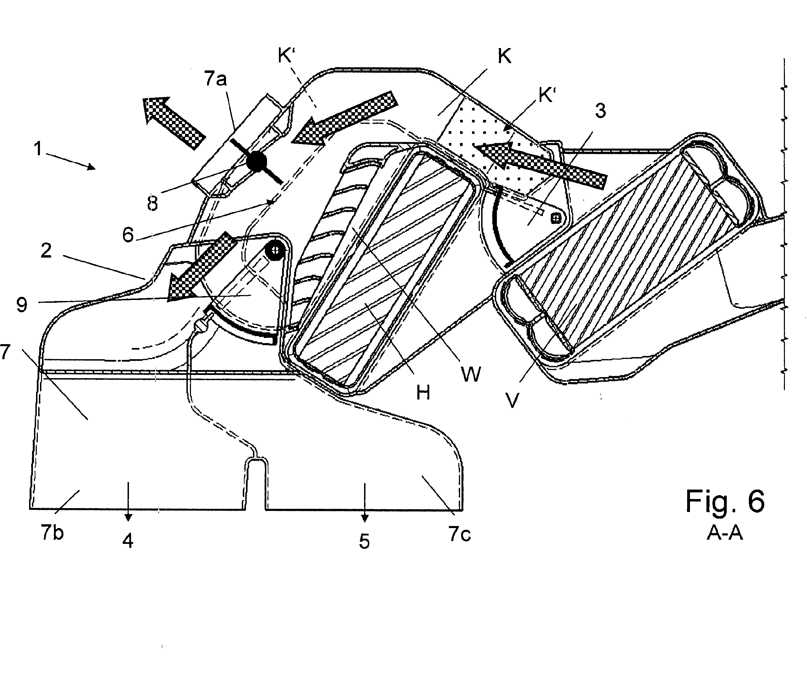

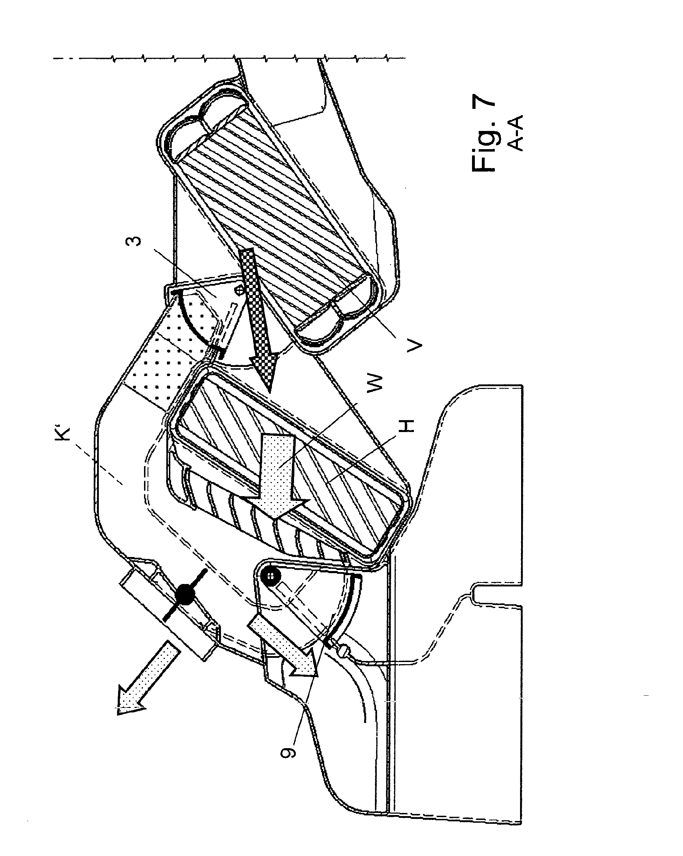

Die Regelung der Verteilung des vom Gebläse G kommenden Luftstroms erfolgt vorliegend mittels einer Temperaturmischklappe 3, wobei es sich um eine Trommelklappe handelt, deren Schwenkachse in der Nähe der Oberseite des Verdampfers am Ende des unteren Drittels angeordnet ist. Die Schwenkachse der Temperaturmischklappe 3 liegt auf Grund der Anordnung des Verdampfers V unterhalb der Oberkante desselben, wie beispielsweise aus Fig. 6 ersichtlich ist, so dass diese Klappe die Bauhöhe nicht oder nur unwesentlich beeinflusst. Für die obere Endstellung der Temperaturmischklappe 3 ist das Luftführungsgehäuse 2 mit einer entsprechenden Aufnahme ausgebildet, in welche das äußerste Ende der Temperaturmischklappe 3 in der Betriebsstellung "maximal warm" aufgenommen wird (siehe Fig. 7), um so den Kaltluftkanal K vollständig zu verschließen. Fig. 6 zeigt die Betriebsstellung "maximal kalt", gemäß der die Temperaturmischklappe 3 in ihrer untersten Position ist, um den Kaltluftkanal K vollständig freizugeben.

Kurz hinter der Temperaturklappe 3 zweigt seitlich vom Kaltluftkanal K ein Kaltluftkanal K' ab, der zu den unteren Luftaustritten führt, vorliegend zum Austritt 4 an der B-Säule und zum Austritt 5 im Fondfußraum, wie stark schematisiert in der Zeichnung angedeutet. Dieser Kaltluftkanal K' zu den unteren Luftaustritten 4 und 5 verläuft parallel zum (Haupt-)Kaltluftkanal K über den Heizer H, jedoch seitlich nach außen versetzt, wodurch der Kaltluftkanalquerschnitt deutlich vergrößert wird. Auf die Regelung der Luftverteilung auf die unteren Luftaustritte 4 und 5 dieses Kaltluftkanals K' wird an späterer Stelle näher eingegangen.

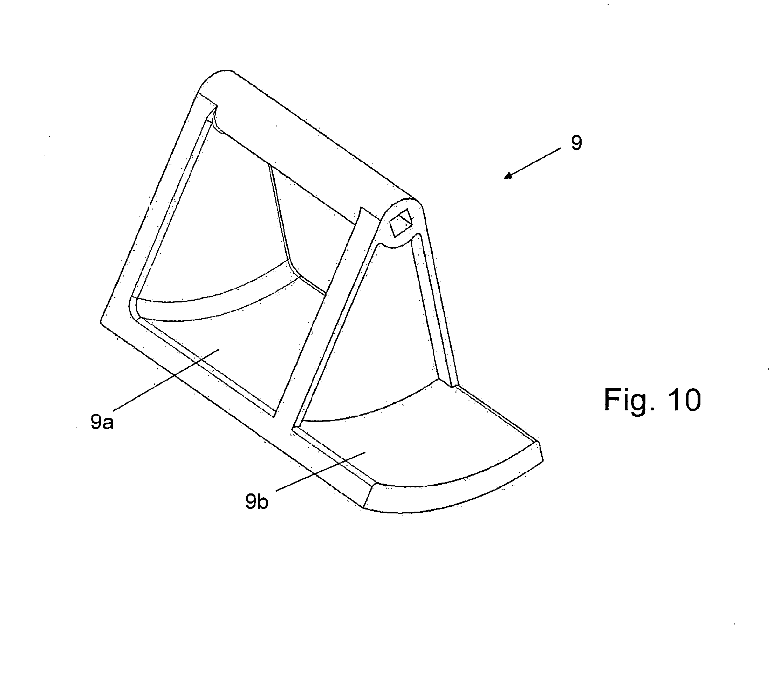

Im Bereich hinter dem Heizer H, in welchen der (Haupt-)Kaltluftkanal K einmündet, ist ein Mischraum 6 ausgebildet, in welchem sich bei den entsprechenden Betriebsstellungen Warm- und Kaltluft mischt, bevor sie dem Fahrzeuginnenraum zugeführt wird. Vom Mischraum 6 zweigen mehrere Luftkanäle 7 ab, wobei der Luftkanal 7a zur Mitteldüse an oberster Position angeordnet ist. Die Regelung des der Mitteldüse zugeführten Luftstroms erfolgt mittels einer zweiflügeligen Klappe 8. Weiter unten zweigen direkt benachbart zueinander der Luftkanal 7b zur B-Säule (Austritt 4) und der Luftkanal 7c zum Fondfußraum (Austritt 5) ab. Die Luftverteilung auf die beiden unteren Luftaustritte 4 und 5 erfolgt mittels eine speziell ausgebildeten Klappe 9, welche im Wesentlichen die Gestalt einer Trommelklappe hat und in Fig. 10 dargestellt ist. Auf Grund ihrer Funktion wird die Klappe 9 im Folgenden auch als Verteilerklappe 9 bezeichnet.

Die Klappe 9 weist einen ersten Bereich 9a, der dem einer Trommelklappe mit kreiszylindrischer Sperrfläche entspricht, und einen zweiten Bereich 9b auf, der durch eine Vergrößerung der Sperrfläche des ersten Bereichs 9a in axialer Richtung gebildet ist. Vorliegend ist die Sperrfläche des zweiten Bereichs 9b etwas kleiner als die des ersten Bereichs 9a. Der zweite Bereich 9b ragt durch einen kreisbogenförmigen Schlitz in der die beiden Kanäle K und K' trennenden Wand in den Endbereich des parallelen Kaltluftkanals K' und regelt die Luftverteilung der kalten, direkt vom Verdampfer V kommenden Luft auf die beiden unteren Luftaustritte 4 und 5, während der erste Bereich 9a im Mischraum 6 angeordnet ist, und in demselben die Luftverteilung der temperierten Luft auf die beiden unteren Luftaustritte 4 und 5 regelt, so dass in den Luftkanälen 7b und 7c zu den unteren Luftaustritten 4 und 5 jeweils eine Mischung von kalter und temperierter Luft gelangt.

In der Betriebsstellung "maximal kalt" wird, wie aus Fig. 6 ersichtlich, die gesamte vom Verdampfer V kommende Luft auf Grund der Stellung der Temperaturmischklappe 3 nach oben, vorbei am Heizer H geleitet, wo sie sich auf den (Haupt-)Kaltluftkanal K und den Kaltluftkanal K' zu den unteren Luftaustritten 4 und 5 verteilt. Die Luft vom Kaltluftkanal K gelangt in dem Mischraum 6, dem keine durch den Heizer H strömende Warmluft zugeführt wird. Vom Mischraum 6 aus gelangt die Kaltluft zu den jeweiligen Luftkanälen 7a, 7b, 7c, deren Klappen geöffnet sind, d.h. in der in Fig. 6 dargestellten Betriebsstellung in die Luftkanäle 7a und 7b- Die Luft vom parallelen Kaltluftkanal K' gelangt - vorbeigeführt am Mischraum 6 - direkt in die unten abzweigenden Luftkanäle 7b und 7c, die zu den Luftaustritten 4 und 5 führen. Dabei ist gemäß der Darstellung von Fig. 6 der Luftkanal 7c zum Luftaustritt 5, also zum Fondfußraum, von der Verteilerklappe 9 verdeckt, so dass die gesamte Luft des parallelen Kaltluftkanals K' vom Verdampfer V zum Luftkanal 7b, also zum Austritt 4 an der B-Säule, geleitet wird. Diesem Kaltluftstrom wird ein Teil der vom Mischraum 6 kommenden Kaltluft beigemischt, der Rest dieser Kaltluft gelangt durch die geöffnete Klappe 8 über den Luftkanal 7a zur Fondbelüftung.

In der Betriebsstellung "maximal warm" gelangt in Folge der Klappenstellung der Temperaturmischklappe 3 keine Luft in den parallelen Kaltluftkanal K' und den Haupt-Kaltluftkanal K, so dass die gesamte Luft durch den Heizer H strömt und erwärmt wird. Ausgehend vom Mischraum 6 dient die Warmluft durch die geöffnete Klappe 8 über den Luftkanal 7a der Fondbelüftung und wird auf Grund der Stellung der Verteilerklappe 9 über den Luftkanal 7b zur B-Säule geleitet.

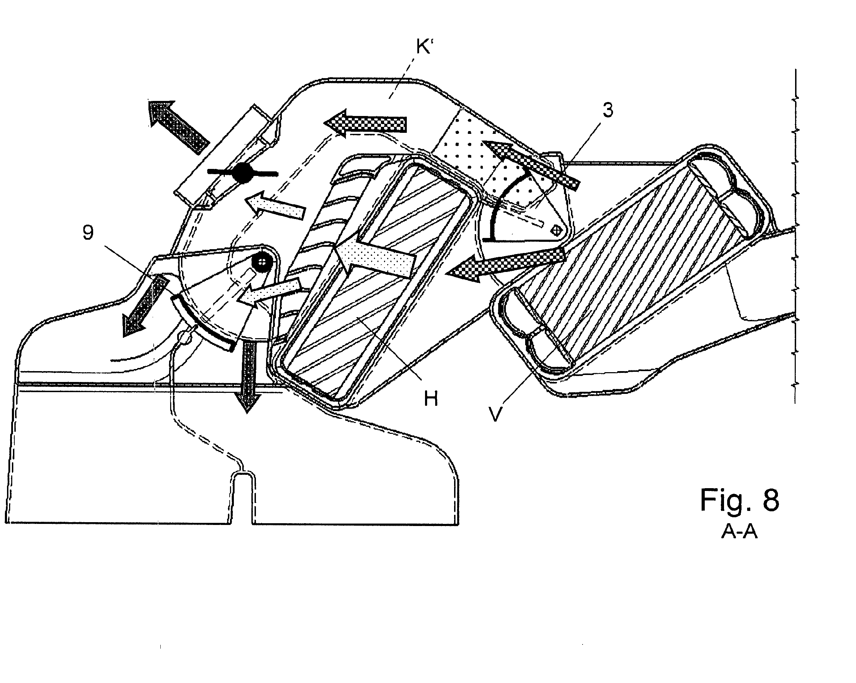

Bei der in Fig. 8 dargestellten Mischstellung erfolgt eine Aufteilung des vom Verdampfer V kommenden Kaltluftstroms auf den Kaltluftkanal K (und K') und den durch den, den Luftstrom erwärmenden Heizer H führenden Warmluftkanal W. Der durch den Haupt-Kaltluftkanal K strömende Kaltluftstrom wird mit dem durch den Heizer H strömenden Warmluftstrom im Mischraum 6 vermischt und gelangt durch die teilweise geöffnete Klappe 8 zur Fond-Mitteldüse und durch die sich in einer mittleren Stellung befindliche Verteilerklappe 9 in die beiden unteren Luftkanäle 7b und 7c, also zu den Austritten 4 und 5 an der B-Säule bzw. im Fondfußraum. Hierbei wird dem temperierten Luftstrom, der in die unteren Luftkanäle 7b und 7c eintritt, über den parallelen Kaltluftkanal K' Kaltluft beigemischt, wobei sich die Warmluft und die Kaltluft über die Weglänge bis zu den einzelnen Austritten miteinander vermischen.

Das Vorsehen des parallelen Kaltluftkanals K' gleicht die ungünstige Lage der Abzeigungen aus dem Mischraum 6 der unteren Luftkanäle 7b und 7c aus, welche ansonsten mit zu viel Warmluft vom Heizer H versorgt würden, so dass der Austritt 4 an der B-Säule und der Austritt 5 im Fondfußraum nicht mit zu warmer Luft versorgt werden.

Die vorstehend beschriebene Klimaanlage kann sowohl ein- als auch zweizonig ausgebildet sein. Dabei kann die Klimaanlage per se auch als zweizonige Klimaanlage ausgebildet sein, wobei die Klappen der beiden Zonen jeweils miteinander gekoppelt sind, so dass de facto aber eine einzonige Klimaanlage vorliegt.

## Patentansprüche

1. Kraftfahrzeug-Klimaanlagenanordnung, insbesondere für eine Fond-Klimaanlage (1), mit mindestens einem Heizer (H) und mindestens einem Verdampfer (V), die in einem Luftführungsgehäuse (2) angeordnet sind, und mit einer Mehrzahl von Luftkanälen, über die temperierte und/oder kalte Luft dem Fahrzeuginnenraum zuführbar ist, wobei vom Kaltluftkanal (K), der Luft vom Verdampfer (V) um den Heizer (H) einem Mischraum (6) zuführt, ein Luftkanal (K') abzweigt, der kalte Luft am Mischraum vorbei direkt dem Fahrzeuginnenraum zuführt, **dadurch gekennzeichnet, dass** in den Luftkanal (K') mindestens ein vom Mischraum (6) abzweigender Luftkanal (7b, 7c) einmündet, so dass die Kaltluft des Luftkanals (K') mit temperierter Luft vom Mischraum (6) vor dem Austritt in den Fahrzeuginnenraum mischbar ist.

2. Kraftfahrzeug-Klimaanlagenanordnung nach Anspruch 1, **dadurch gekennzeichnet, dass** der vom Kaltluftkanal (K) abzweigende Luftkanal (K') mittels einer Temperaturmischklappe (3), insbesondere einer Trommelklappe, welche der Regelung des Luftstroms durch den Heizer (H) und an demselben vorbei dient, verschließbar ist, wobei die Regelung in Abhängigkeit der Regelung der durch den Kaltluftkanal (K) und vorbei am Heizer (H) geleiteten Luftmenge erfolgt.

3. Kraftfahrzeug-Klimaanlagenanordnung nach Anspruch 1 oder 2, **dadurch gekennzeichnet, dass** dem vom Kaltluftkanal (K) abzweigenden Luftkanal (K') temperierte Luft vom Mischraum (6) zuführbar ist.

4. Kraftfahrzeug-Klimaanlagenanordnung nach einem der vorhergehenden Ansprüche, **dadurch gekennzeichnet, dass** der vom Kaltluftkanal (K) abzweigende Luftkanal (K') sich in mindestens zwei Luftkanäle verzweigt, wobei die Luftverteilung der Kaltluft auf die beiden Luftkanäle (7b, 7c) mittels einer Klappe, insbesondere mittels einer Trommelklappe (9) regelbar ist.

5. Kraftfahrzeug-Klimaanlagenanordnung nach Anspruch 4, **dadurch gekennzeichnet, dass** die Klappe gleichzeitig auch der Luftverteilung der vom Mischraum (6) kommenden, den Luftkanälen (7b, 7c) zugeführten Luft dient.

6. Kraftfahrzeug-Klimaanlagenanordnung nach Anspruch 4 oder 5, **dadurch gekennzeichnet, dass** die Klappe eine Trommelklappe (9) mit einem axialen Fortsatz mit kreisbogenförmigem Querschnitt ist, der durch einen Schlitz in der Wand des Luftführungsgehäuses (2) ragt und die Luftverteilung auf mindestens zwei Luftkanäle (7b, 7c) regelt.

7. Kraftfahrzeug-Klimaanlagenanordnung nach einem der vorhergehenden Ansprüche, **dadurch gekennzeichnet, dass** die Temperaturmischklappe (3) und die der Luftverteilung auf die Luftkanäle (7b, 7c) dienende Klappe jeweils Trommelklappen sind.

8. Kraftfahrzeug-Klimaanlagenanordnung nach Anspruch 7, **dadurch gekennzeichnet, dass** die Schwenkachsen der Trommelklappen (3, 9) jeweils entgegen der normalen Luftströmungsrichtung von der Sperrfläche angeordnet sind.

9. Kraftfahrzeug-Klimaanlagenanordnung nach einem der vorhergehenden Ansprüche, **dadurch gekennzeichnet, dass** der vom Kaltluftkanal (K) abzweigende Luftkanal (K') die Kaltluft in einen unteren Bereich des Fahrzeuginnenraums führt.

10. Kraftfahrzeug-Klimaanlagenanordnung nach einem der vorhergehenden Ansprüche, **dadurch gekennzeichnet, dass** Heizer (H) und Verdampfer (V) in gleicher Richtung, jedoch in unterschiedlichen Winkeln, geneigt sind.

11. Kraftfahrzeug-Klimaanlagenanordnung nach einem der vorhergehenden Ansprüche, **dadurch gekennzeichnet, dass** eine Überlappung von Verdampfer (V) und Heizer (H) vorgesehen ist, wobei die Projektion von Verdampfer (V) und Heizer (H) auf eine horizontale Ebene (E) eine Überlappung von maximal einem Drittel der auf die horizontale Ebene (E) projizierten Fläche des Heizers (H) entspricht.

12. Kraftfahrzeug, **gekennzeichnet durch** eine Klimaanlagenanordnung nach einem der Ansprüche 1 bis 11.

## Claims

1. A motor vehicle air conditioning system, in particular for a rear air conditioning (1), comprising at least one heater (H) and at least one evaporator (V), which are arranged in an air guidance housing (2), and comprising a plurality of air ducts, via which temperature-controlled and/or cool air can be fed to the vehicle interior, an air duct (K'), which feeds cool air past the mixing chamber to the vehicle interior, branching from the cool air duct (K), which feeds air from the evaporator (V) to a mixing chamber (6) around the heater (H), **characterised in that** at least one air duct (7b, 7c) branching from the mixing chamber (6) opens out into the air duct (K') so that the cool air of the air duct (K') can be mixed with temperature-controlled air from the mixing chamber (6) before the discharge into the vehicle interior.

2. The motor vehicle air conditioning system according to claim 1, **characterised in that** the air duct (K') branching from the cool air duct (K) can be closed by means of a temperature mix flap (3), in particular a drum flap, which is used to control the airflow through the heater (H) and past said heater, the control process being carried out in accordance with the control of the air volume conducted through the cool air duct (K) and past the heater (H).

3. The motor vehicle air conditioning system according to claim 1 or 2, **characterised in that** temperature-controlled air from the mixing chamber (6) can be fed to the air duct (K') branching from the cool air duct (K).

4. The motor vehicle air conditioning system according to one of the preceding claims, **characterised in that** the air duct (K') branching from the cool air duct (K) branches into at least two air ducts, wherein the air distribution of the cooling air between the two air ducts (7b, 7c) can be controlled by means of a flap, in particular by means of a drum flap (9).

5. The motor vehicle air conditioning system according to claim 4, **characterised in that** the flap is also used simultaneously for air distribution of the air coming from the mixing chamber (6) and fed to the air ducts (7b, 7c).

6. The motor vehicle air conditioning system according to claim 4 or 5, **characterised in that** the flap is a drum flap (9) with an axial extension with a circular-arc-shaped cross section, which protrudes through a slit in the wall of the air guidance housing (2) and controls the air distribution between at least two air ducts (7b, 7c).

7. The motor vehicle air conditioning system according to one of the preceding claims, **characterised in that** the temperature mix flap (3) and the flap used for air distribution over the air ducts (7b, 7c) are each drum flaps.

8. The motor vehicle air conditioning system according to claim 7, **characterised in that** the pivot axes of the drum flaps (3, 9) are each arranged against the normal direction of air flow from the barrier area.

9. The motor vehicle air conditioning system according to one of the preceding claims, **characterised in that** the air duct (K') branching from the cool air duct (K) guides the cool air into a lower region of the vehicle interior.

10. The motor vehicle air conditioning system according to one of the preceding claims, **characterised in that** the heater (H) and the evaporator (V) are inclined in the same direction, but in different angles.

11. The motor vehicle air conditioning system according to one of the preceding claims, **characterised in that** an overlap of the evaporator (V) and heater (H) is provided, wherein the projection of the evaporator (V) and heater (H) over a horizontal plane (E) corresponds to an overlap of at most one third of the area of the heater (H) projected over the horizontal plane (E).

12. A motor vehicle, **characterised by** an air conditioning system according to one of claims 1 to 11.

## Revendications

1. Agencement d'un système de climatisation d'un véhicule automobile, en particulier pour un système de climatisation arrière (1), comprenant au moins un dispositif de chauffage (H) et au moins un évaporateur (V) qui sont disposés dans un carter de guidage d'air (2), et comprenant une pluralité de conduits d'air par lesquels de l'air tempéré et/ou de l'air froid peut être fourni à l'habitacle du véhicule où, à partir du conduit d'air froid (K) qui fournit de l'air provenant de l'évaporateur (V), à un espace de mélange (6) situé autour du dispositif de chauffage (H), bifurque un conduit d'air (K') qui fournit à l'habitacle du véhicule, de l'air froid passant devant l'espace de mélange, **caractérisé en ce qu'**au moins un conduit d'air (7b, 7c) bifurquant à partir de l'espace de mélange (6) débouche dans le conduit d'air (K'), de sorte que l'air froid du conduit d'air (K') peut être mélangé dans l'habitacle du véhicule, en amont de la sortie, avec de l'air tempéré provenant de l'espace de mélange (6).

2. Agencement d'un système de climatisation d'un véhicule automobile selon la revendication 1, **caractérisé en ce que** le conduit d'air (K') bifurquant à partir du conduit d'air froid (K) peut être fermé au moyen d'un volet mélangeur de température (3), en particulier au moyen d'un volet à tambour qui sert à la régulation du flux d'air traversant le dispositif de chauffage (H) et passant devant celui-ci, où la régulation se produit en fonction de la régulation de la quantité d'air traversant le conduit d'air froid (K) et dirigée en passant devant le dispositif de chauffage (H).

3. Agencement d'un système de climatisation d'un véhicule automobile selon la revendication 1 ou 2, **caractérisé en ce que** de l'air tempéré provenant de l'espace de mélange (6) peut être fourni au conduit d'air (K') bifurquant à partir du conduit d'air froid (K).

4. Agencement d'un système de climatisation d'un véhicule automobile selon l'une quelconque des revendications précédentes, **caractérisé en ce que** le conduit d'air (K') bifurquant à partir du conduit d'air froid (K) se ramifie en au moins deux conduits d'air, où la répartition de l'air froid fourni aux deux conduits d'air (7b, 7c) peut être régulée au moyen d'un volet, en particulier au moyen d'un volet à tambour (9).

5. Agencement d'un système de climatisation d'un véhicule automobile selon la revendication 4, **caractérisé en ce que** le volet sert aussi, en même temps, à la répartition de l'air provenant de l'espace de mélange (6) et fourni aux conduits d'air (7b, 7c).

6. Agencement d'un système de climatisation d'un véhicule automobile selon la revendication 4 ou 5, **caractérisé en ce que** le volet est un volet à tambour (9) comportant un prolongement axial ayant une section en forme d'arc de cercle, prolongement qui, à travers une fente, pénètre dans la paroi du carter de guidage d'air (2) et régule la répartition de l'air fourni à au moins deux conduits d'air (7b, 7c).

7. Agencement d'un système de climatisation d'un véhicule automobile selon l'une quelconque des revendications précédentes, **caractérisé en ce que** le volet mélangeur de température (3) et le volet servant à la répartition de l'air fourni aux conduits d'air (7b, 7c) sont à chaque fois des volets à tambour.

8. Agencement d'un système de climatisation d'un véhicule automobile selon la revendication 7, **caractérisé en ce que** les axes de pivotement des volets à tambour (3, 9) sont disposés à chaque fois, à partir de la surface de blocage, dans le sens inverse de la direction normale d'écoulement d'air.

9. Agencement d'un système de climatisation d'un véhicule automobile selon l'une quelconque des revendications précédentes, **caractérisé en ce que** le conduit d'air (K') bifurquant à partir du conduit d'air froid (K) guide l'air froid dans une zone inférieure de l'habitacle du véhicule.

10. Agencement d'un système de climatisation d'un véhicule automobile selon l'une quelconque des revendications précédentes, **caractérisé en ce que** le dispositif de chauffage (H) et l'évaporateur (V) sont inclinés dans la même direction, mais suivant des angles différents.

11. Agencement d'un système de climatisation d'un véhicule automobile selon l'une quelconque des revendications précédentes, **caractérisé en ce qu'**il est prévu un chevauchement de l'évaporateur (V) et du dispositif de chauffage (H), où la projection de l'évaporateur (V) et du dispositif de chauffage (H), sur un plan horizontal (E), correspond à un chevauchement au maximum d'un tiers de la surface - projetée sur le plan horizontal (E) - du dispositif de chauffage (H).

12. Véhicule automobile **caractérisé par** un agencement du système de climatisation selon l'une quelconque des revendications 1 à 11.
